# FASCICULE DE BREVET EUROPEEN

(11) **EP 0 427 594 B1**
(45) Date de publication et mention de la délivrance du brevet: **18.05.1994**
(21) Numéro de dépôt: 90403073.1
(22) Date de dépôt: 30.10.1990
(51) Int. Cl.: H02H 9/00, F02P 3/04

(54) **Installation d'alimentation de charges inductives en impulsions, à limitation de tension**
Schaltung zur impulsförmigen Versorgung induktiver Lasten mit einer Spannungsbegrenzung
Circuit for pulsed supply for inductive loads with limiting the voltage

(30) Priorité: 07.11.1989 FR 8914592
(43) Date de publication de la demande: 15.05.1991
(73) Titulaire: MARELLI AUTRONICA, 92000 Nanterre (FR)
(72) Inventeur: Boucly, Bernard, F-78150 Le Chesnay (FR)
(74) Mandataire: Bérogin, Francis

(56) Documents cités:
- DE-A- 1 956 145
- DE-A- 2 840 100
- DE-B- 2 223 376
- DE-B- 2 451 477
- US-A- 3 940 658
- ELECTRONIQUE ET APPLICATIONS INDUSTRIELLES, no. 257, octobre 1978, Paris, FR, pp. 17-22 ; J.M. Peter: "Déjouez les pièges des montages à transistors de puissance et accroissez leur fiabilité"

## Description

L'invention a pour objet une installation d'alimentation de charges inductives à travers des premiers interrupteurs qui sont chacun en série avec une source et une charge inductive respective, l'installation étant munie de moyens de fermeture périodique des premiers interrupteurs pendant des durées brèves successives, et de moyens de limitation de surtension agencés aux bornes des premiers interrupteurs.

L'invention trouve une application particulièrement importante dans les installations d'allumage par étincelles et/ou d'injection de combustible pour moteurs à combustion interne, qui comportent des charges inductives (bobinage primaire du transformateur de création de la haute tension d'allumage ou enroulement d'injecteur).

On connait déjà des limiteurs de surtension. La plupart comportent une diode Zener placée en parallèle avec le premier interrupteur et qui s'amorce lorsque la tension à ses bornes dépasse une valeur déterminée. Cette solution a l'inconvénient de transformer en chaleur et de dissiper en pure perte l'énergie stockée dans la charge.

On connait également par DE 19 56 145 une installation du type présenté en premier lieu ci-dessus, dans laquelle les moyens de limitation de surtension, agencés aux bornes des premiers interrupteurs, comprennent un condensateur unique, dont une première borne est reliée aux jonctions entre les premiers interrupteurs et les charges inductives respectives par l'intermédiaire de composants à conduction unidirectionnelle et dont la seconde borne est reliée à la jonction entre les premiers interrupteurs et la source, et un second interrupteur faisant partie d'un circuit en série placé entre la première borne du condensateur unique et la jonction entre la source et les charges inductives respectives et commandé en réponse à la tension aux bornes du condensateur unique.

Ce condensateur absorbe l'énergie inductive stockée dans une charge lorsque le premier interrupteur correspondant s'ouvre, de façon à limiter la surtension apparaissant alors aux bornes de celui-ci, et le second interrupteur se ferme ensuite lorsque la tension aux bornes du condensateur est supérieure à un certain seuil, ce qui permet alors de restituer à la source d'alimentation de l'énergie accumulée dans le condensateur, et donc au moins partiellement l'énergie stockée dans la charge inductive dont le premier interrupteur vient de s'ouvrir.

Mais, dans cette installation, le second interrupteur est une diode Zener, de sorte que cette installation présente le même inconvénient que les limiteurs de surtension connus à diode Zener, tels que présentés ci-dessus, c'est-à-dire l'inconvénient de transformer en chaleur et de dissiper en pure perte une partie de l'énergie stockée dans les charges inductives. Cet inconvénient de cette installation est d'autant plus marqué que la diode Zener, faisant fonction de second interrupteur, est en série avec une résistance.

De plus, la limitation de surtension et la récupération partielle d'énergie sont déterminées par le même condensateur, la même diode Zener, et donc le même seuil d'amorçage, et la même résistance, quelles que soient les caractéristiques, identiques ou différentes les unes des autres, des charges inductives.

La présente invention vise à fournir une installation d'alimentation à limitation de surtension du type présenté ci-dessus, tel que connu par DE 19 56 145, et permettant non seulement de restituer à la source d'alimentation au moins partiellement l'énergie stockée dans les charges inductives, mais également de réduire notablement la puissance dissipée dans les circuits d'attaque des charges inductives, ainsi que d'adapter les caractéristiques de limitation de surtension à chacune des charges inductives en conservant un degré de récupération d'énergie élevé, lorsque ces charges inductives ont des caractéristiques différentes les unes des autres.

Ce cas est notamment celui des installations destinées à alimenter d'une part au moins une bobine d'allumage de moteur à combustion interne et au moins un injecteur de combustible. Les surtensions admissibles sont très différentes, par exemple d'environ 360 volts pour la bobine d'allumage, d'environ 60 volts pour l'enroulement de l'injecteur monopoint ou de chacun des injecteurs multipoints.

Dans ce but, l'invention propose une installation du type présenté ci-dessus, telle que connue par DE 19 56 145, et qui se caractérise en ce que les moyens de limitation de surtension comprennent en outre une inductance placée en série avec le second interrupteur entre la première borne du condensateur unique et la jonction entre la source et les charges inductives respectives, et des moyens de commande du second interrupteur comprenant un comparateur à seuils dont les seuils de fonctionnement sont sélectionnés par un organe de commande tel qu'un micro-processeur en fonction de la charge inductive dont le premier interrupteur vient de s'ouvrir.

L'ensemble constitué du condensateur, du second interrupteur, de l'inductance et des moyens de commande du second interrupteur peut être regardé comme un convertisseur de tension à découpage, qui peut avoir un rendement élevé si les moyens de commande du second interrupteur sont correctement calibrés et si le condensateur est adapté à l'inductance.

Le découplage mutuel des charges étant assuré par les composants à conduction unidirectionnelle, après l'ouverture d'un premier interrupteur, le comparateur des moyens de commande du second interrupteur de l'installation selon l'invention provoque la fermeture du second interrupteur, lorsque la surtension dépasse le seuil haut correspondant à la charge inductive dont l'interrupteur vient de s'ouvrir, et son ouverture lorsque la tension devient inférieure au seuil bas de la charge inductive correspondante, lequel seuil bas peut être égal au seuil haut correspondant, diminué d'une valeur prédéterminée.

On comprend qu'une installation suivant l'invention réduit notablement la puissance dissipée dans les circuits d'attaque des charges inductives, dont chacune regroupe un premier interrupteur (constitué généralement par un transistor) et ses moyens de commande. Dans la pratique, une réduction de 30% de la puissance dissipée est possible en ne mettant en oeuvre que des moyens simples, constitués par un seul interrupteur suppémentaire (qui d'ailleurs est prévu d'origine dans beaucoup de circuits d'allumage actuels et constitué par un simple transistor bipolaire ou MOS) et des moyens de commande très simples.

L'invention sera mieux comprise à la lecture de la description qui suit de modes particuliers de réalisation donnés à titre d'exemples non limitatifs. La description se réfère aux dessins qui l'accompagnent, dans lesquels :
- la figure 1 est un schéma de principe d'un limiteur de surtension ;
- la figure 2 est un schéma montrant l'évolution de la tension et du courant en plusieurs points du circuit de la figure 1 ;
- la figure 3 est un schéma d'installation d'allumage et d'injection multipoints équipée d'un limiteur du type montré en figure 1 ;
- la figure 4, similaire à la figure 3, est un schéma d'une installation selon l'invention d'allumage et d'injection multipoints équipée d'un limiteur commandé par le processeur qui commande également les interrupteurs d'alimentation des charges.

La figure 5, similaire à la figure 2, illustre le fonctionnement de l'installation de la figure 4.

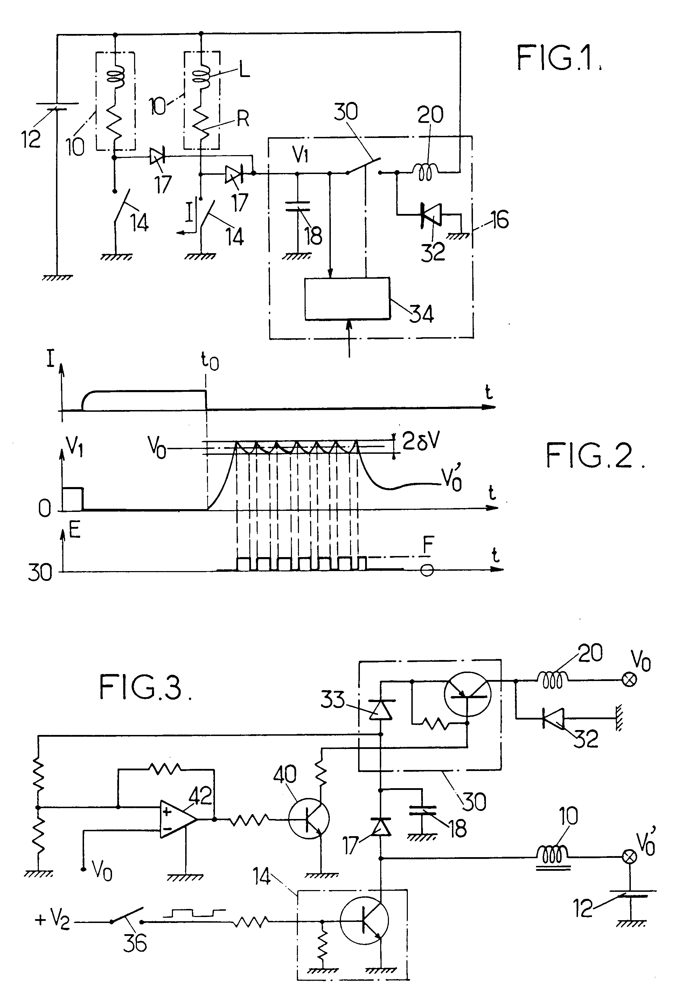

Le schéma de la figure 1 montre les constituants essentiels d'une installation destinée à fournir des créneaux de courant de durée et de fréquence réglables à des charges identiques 10. L'installation comprend une source 12 de courant continu, d'un type pouvant récupérer l'énergie par circulation inverse de courant, constituée généralement par un accumulateur. La durée et la fréquence des créneaux de courant traversant chaque charge sont fixées par la cadence et la durée de fermeture d'un interrupteur 14 associé à la charge.

Dans le cas d'une installation d'injection multipoints pour moteur à combustion interne, chaque charge 10, ayant une inductance L et une résistance R, est constituée par le bobinage d'un injecteur. Dans le cas d'une installation d'allumage multiple "électronique", chaque charge 10 est constituée par le primaire d'un transformateur d'allumage associé à une fraction seulement des cylindres du moteur (1 ou 2 cylindres par exemple).

Dans un cas comme dans l'autre, l'interrupteur 14 est en règle générale constitué par un transistor ; dans le cas d'une installation d'allumage, l'interrupteur 14 est commandé par un quelconque des différents types de calculateurs d'allumage électronique bien connus.

Lors de la coupure d'un circuit par ouverture de l'interrupteur 14 correspondant, la disparition du champ magnétique produit par la charge se traduit par une surtension. Les installations actuelles comportent généralement, pour limiter cette surtension, un élément amorçable placé en parallèle avec l'interrupteur 14, tel qu'une diode zener. L'énergie stockée dans la charge est alors dissipée en pure perte sous forme de chaleur qui doit être évacuée.

Le limiteur de tension 16 montré en figure 1 permet au contraire de restituer à la source 12 l'énergie stockée sous forme inductive dans les charges 10.

Chaque charge est reliée par une diode de découplage 17 au limiteur unique 16 qui comporte un circuit dont le fonctionnement est comparable à celui d'un convertisseur de tension à découpage, à rendement élevé. Il comprend un condensateur de découpage 18 placé en parallèle sur l'interrupteur 14 et une inductance 20 dont la valeur est choisie en fonction de la capacité du condensateur 18, pour obtenir une fréquence de découpage ayant un ordre de grandeur supérieur au kHz. Cette inductance (self ou transformateur) sert à restituer l'énergie à la source. Un commutateur 30 permet de fermer un circuit comprenant la charge 10 et l'inductance 20. Un élément à conduction unidirectionnelle, tel qu'une diode 32, placée en parallèle sur l'inductance 20 permet la recirculation de courant en shuntant l'inductance et donc la récupération d'énergie.

Pour provoquer le fonctionnement en convertisseur de tension, le commutateur 30, généralement constitué par un transistor, est commandé par des moyens constituant un comparateur de tension à seuils 34 dont l'entrée est reliée au point situé entre le condensateur 18 et les diodes 17. Le comparateur 34 est prévu pour ouvrir le commutateur 30 lorsque la tension de commande qu'il reçoit est inférieure à une valeur déterminée, afin de charger le condensateur 18, et fermer le commutateur 30 lorsque la tension atteint une autre valeur, nettement supérieure à cette valeur déterminée. En fait, le comparateur est prévu pour présenter une hystérésis, c'est-à-dire provoquer la fermeture pour une tension Vₒ + δV ayant une différence prédéterminée avec celle Vₒ - δV qui provoque l'ouverture.

Le fonctionnement du limiteur de la figure 1 apparait sur la figure 2 où les lignes marquées I, V₁ et E montrent respectivement la variation en fonction du temps du courant qui traverse l'un quelconque des interrupteurs 14, de la tension aux bornes du condensateur 18 (qui commande le comparateur 34) et de l'état du commutateur 30 (la lette F indiquant l'état de la fermeture). L'échelle n'est pas respectée pour plus de clarté.

Dès qu'un interrupteur 14 se ferme, un courant I fourni par la source 12 traverse la charge correspondante 10 et cet interrupteur 14. Lorsque l'interrupteur 14 s'ouvre, à l'instant t₀, le courant qui le traverse s'annule. La disparition du champ créé par l'inductance L de la charge 10 provoque une montée de la tension V₁ à ses bornes. Le commutateur 30 étant alors ouvert, l'inductance tend à se décharger en faisant circuler un courant, de même sens que celui qui la traversait précédemment, à travers le seul trajet qui subsiste, à savoir le condensateur 18, et charge ce dernier. Dès que la tension V₁ aux bornes du condensateur atteint une valeur V₀ + δV, le comparateur 34 ferme le commutateur 30. Le condensateur 18 se décharge alors à travers l'inductance 20 en restituant de l'énergie à la source 12. Dès que la tension V₁ est retombée à la valeur V₀-δV, par suite de la décharge du condensateur 18, le processus reprend. Il s'achève lorsque l'énergie stockée dans l'inductance L devient incapable de recharger le condensateur 18 : la tension V₁ descend alors progressivement, du fait des pertes, jusqu'à une valeur V'_{O} égale à la tension fournie par la source 12. La fermeture ultérieure d'un interrupteur 14 fait retomber la tension V₁ à O. La diode 32 permet au courant de rebouclage de passer par un circuit à résistance faible.

Des indications quantitatives, correspondant à une installation d'injection multipoints représentative, font apparaître l'intérêt de l'invention.

Classiquement, une charge constituée par un injecteur monopoint a une inductance L de l'ordre de 2 mH et une résistance de l'ordre de 2 Ohms. La puissance dissipée par le circuit de commande est alors réduite d'environ 1,5 W, c'est-à-dire de 30 %, par rapport à celle d'un circuit classique utilisant une diode Zener de limitation de surtension. Ce gain de 30 % réduit la température du boîtier comportant le circuit et le calculateur de commande, ce qui rend l'ensemble plus fiable.

La figure 3, où une seule charge (telle qu'une bobine d'allumage) et un seul interrupteur sont représentés pour plus de simplicité, montre une constitution possible d'une installation conforme au schéma de la figure 1. Les composants correspondants des deux figures portent le même numéro de référence. L'interrupteur 14 est constitué par un transistor bipolaire dont la base est alternativement portée à la masse et à une tension de commande +V₂, par exemple de 10 volts, par un calculateur, schématisé par un rupteur 36. L'interrupteur 14 permet de fermer par la masse le circuit de l'injecteur 10, relié en permanence à la source 12 fournissant une tension V'₀, par exemple de 12 volts, sur la masse.

Le commutateur 30 est constitué également par un transistor bipolaire dont la base est reliée d'une part, par la mise en série d'une résistance et d'une diode 33, au condensateur 18, d'autre part, par une résistance, à un transistor d'attaque 40. Pour un condensateur 18 de 10 nF, on adoptera généralement une inductance 20 d'environ 200 µH. Le transistor 40 est commandé par un comparateur 42, qui constitue le circuit 34 avec le transistor 40. Le comparateur 42 reçoit, sur une entrée, une fraction de la tension aux bornes du condensateur 18, sur l'autre entrée la tension de référence V₀. Il est du type présentant une hystérésis, par exemple par commutation aux valeurs V₀ + δV = 51,8 Volts et V₀ - δV = 48,2 Volts. Dans ce cas la tension appliquée par le transistor d'attaque 40 au commutateur 30 présente une loi de variation du genre montré sur la ligne 30 de la figure 2, les deux niveaux pris alternativement par la tension étant de 0 Volts et 50 Volts.

Le comparateur 42 et le transistor 40 pourront être incorporés à un calculateur déterminant la fréquence et le rapport cyclique des créneaux de commande d'allumage et d'injection.

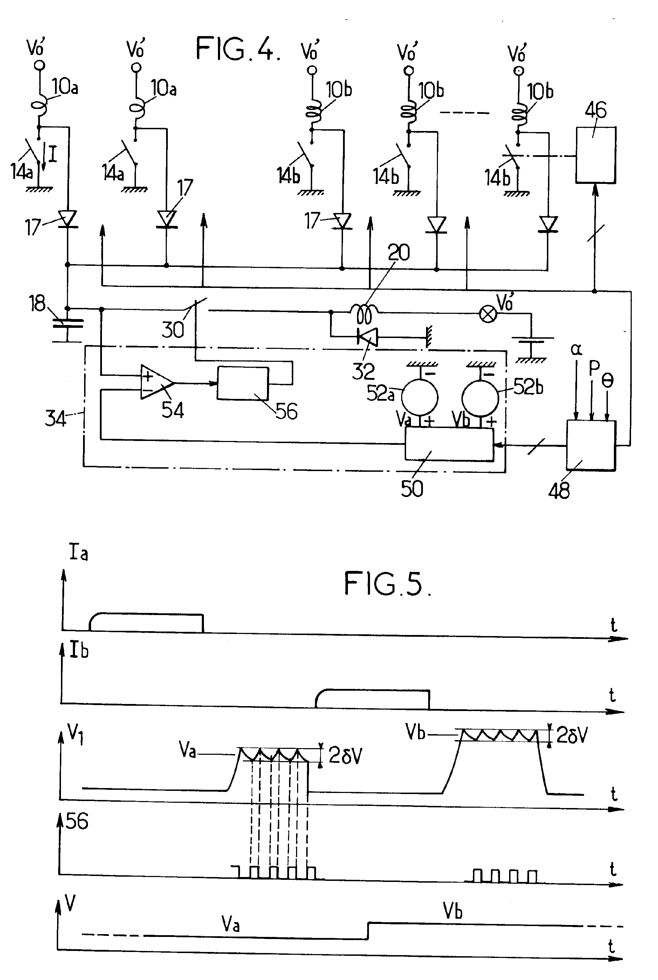

Dans le mode de réalisation de l'invention montré en figure 4, où les organes correspondant à ceux déjà décrits portent le même numéro de référence éventuellement affecté d'un indice, les charges à alimenter ont diverses natures. Elles comprennent par exemple des charges 10a constituées par des primaires de bobine d'allumage, en série avec des interrupteurs 14a, et des enroulements d'injecteur 10b, en série avec des interrupteurs 14b et alimentées par la même source de tension V'₀.

Les interrupteurs 14a seront généralement constitués par des transistors bipolaires, étant donné qu'ils doivent supporter des tensions élevées, tandis que les interrupteurs 14b peuvent être constitués par des transistors MOS de puissance. Tous ces interrupteurs sont commandés par un même interface de commande 46 à partir d'un calculateur 48 qui reçoit des signaux représentatifs de paramètres de fonctionnement du moteur, tels que la position angulaire α du vilebrequin du moteur, la dépression P en aval du papillon, la position angulaire ϑ du papillon.

Il est évidemment nécessaire que les différentes charges soient alimentées pendant des intervalles de temps différents, dont l'écartement est suffisant pour permettre à l'inductance de se décharger avant fermeture d'un nouvel interrupteur.

Le calculateur 48 commande également un multiplexeur 50 qui fournit sur sa sortie l'une ou l'autre de deux tensions de référence Va et Vb provenant de générateurs de référence respectifs 52a et 52b. La tension de sortie du multiplexeur est adressée sur l'une des entrées d'un amplificateur 54 monté en comparateur, dont l'autre entrée reçoit la tension aux bornes du condensateur 18. On reconstitue ainsi un ensemble comparateur 34 remplissant la même fonction que celui de la figure 1, mais avec plusieurs tensions de référence. Le nombre de ces tensions de référence, égal à 2 dans le cas représenté, peut évidemment être accru. La sortie de l'amplificateur-comparateur 54 est appliquée à un oscillateur 56 fournissant un signal carré ou rectangulaire de fréquence supérieure d'au moins un ordre de grandeur (et souvent de plusieurs ordres de grandeur) à celle de fermeture des interrupteurs 14a et 14b.

Cet oscillateur commande à son tour l'interrupteur 30.

Les deux premières lignes de la figure 5 montrent l'allure du courant qui traverse respectivement l'une des charges 10a et l'une des charges 10b, dès la fermeture des interrupteurs correspondants 14a et 14b. La ligne suivante montre la variation de la tension V₁ aux bornes du condensateur 18 lors de l'ouverture de l'interrupteur 14a ou 14b. L'oscillateur 56 provoque alors l'ouverture et la fermeture du commutateur unique 30 de façon à maintenir la tension dans une plage de largeur 2 δV fixée par la cadence des impulsions de sortie de l'oscillateur 56 (quatrième ligne de la figure 5). Cet oscillateur peut être à fréquence constante, ou plus généralement, le début et la fin de créneau de commande peuvent être commandés par le dépassement d'une tension V + δV et la descente au-dessous d'une tension V - δV. La tension V prend elle-même alternativement les valeurs Va et Vb, comme indiqué à la cinquième ligne de la figure 5.

On voit que, quel que soit le mode de réalisation adopté, un limiteur unique permet de récupérer l 'énergie provenant d'un nombre de charges quelconque, à condition qu'elles aient un fonctionnement décalé. La surtension maximale est programmable par un organe de commande programmé ou câblé. Dans tous les cas, les pertes Joule sont notablement diminuées.

## Revendications

1. Installation d'alimentation de charges inductives (10a, 10b) à travers des premiers interrupteurs (14a, 14b) qui sont chacun en série avec une source (Vₒ') et une charge inductive respective (10a, 10b), l'installation étant munie de moyens (46-48) de fermeture périodique des premiers interrupteurs (14a, 14b) pendant des durées brèves successives et de moyens de limitation de surtension agencés aux bornes des premiers interrupteurs (14a, 14b), ces moyens de limitation de surtension comprenant un condensateur unique (18), dont une première borne est reliée aux jonctions entre les premiers interrupteurs (14a, 14b) et les charges inductives (10a, 10b) respectives par l'intermédiaire de composants à conduction unidirectionnelle (17) et dont la seconde borne est reliée à la jonction entre les premiers interrupteurs (14a, 14b) et la source (Vₒ'), et un second interrupteur (30) faisant partie d'un circuit en série placé entre la première borne du condensateur unique (18) et la jonction entre la source et les charges inductives respectives (10a, 10b) et commandé en réponse à la tension aux bornes dudit condensateur unique (18), caractérisée en ce que les moyens de limitation de surtension comprennent en outre une inductance (20) placée en série avec le second interrupteur (30) entre la première borne du condensateur unique (18) et la jonction entre la source (Vₒ') et les charges inductives respectives (10a, 10b), et des moyens (34) de commande du second interrupteur (30) comprenant un comparateur (54) à seuils dont les seuils de fonctionnement sont sélectionnés par un organe de commande (48, 50) tel qu'un micro-processeur en fonction de la charge inductive (10a, 10b) dont le premier interrupteur (14a, 14b) vient de s'ouvrir.

2. Installation selon la revendication 1, caractérisée en ce qu'une au moins des charges (10a, 10b) est constituée par une bobine d'allumage (10a) de moteur à combustion interne et au moins une autre par un injecteur (10b) de combustible du moteur.

3. Installation selon l'une des revendications 1 et 2, caractérisée en ce que l'inductance (20) et le condensateur (18) sont proportionnés l'un à l'autre de façon à réaliser un découpage à une fréquence dont l'ordre de grandeur est supérieur à 1 kHz.

## Patentansprüche

1. Schaltung zur impulsförmigen Versorgung induktiver Lasten (10a,10b) durch erste Unterbrecher (14a,14b) hindurch, die jeweils in Reihe mit einer Spannungsquelle (V₀') und einer entsprechenden induktiven Last (10a,10b) sind, wobei die Schaltung mit Einrichtungen (46-48) zum periodischen Schließen der ersten Unterbrecher (14a,14b) während kurzer aufeinanderfolgender Zeitspannen und mit Einrichtungen versehen ist zum Begrenzen der Überspannung, die sich an den Anschlüssen der ersten Unterbrecher (14a,14b) ausbildet, wobei diese Einrichtungen zum Begrenzen der Überspannung einen einzelnen Kondensator (18) umfassen, dessen erster Anschluß mit Verbindungen zwischen dem ersten Unterbrecher (14a,14b) und den induktiven Lasten (10a,10b) jeweils durch Bauteile (17), die nur in eine Richtung leiten, verbunden ist, und dessen zweiter Anschluß mit der Verbindung zwischen den ersten Unterbrechern (14a,14b) und der Spannungsquelle (V₀') verbunden ist, und ein zweiter Unterbrecher (30), der einen Schaltungsabschnitt in Reihe zwischen dem ersten Anschluß des einzigen Kondensators (18) und der Verbindung zwischen der Spannungsquelle und den jeweiligen induktiven Lasten (10a,10b) bildet und in Abhängigkeit von der Spannung der Anschlüsse des einzigen Kondensators (18) gesteuert wird,
**dadurch gekennzeichnet,**
daß die Einrichtungen zum Begrenzen der Überspannung außerdem eine Induktivität (20) umfassen, die in Reihe mit dem zweiten Unterbrecher (30) zwischen dem ersten Anschluß des einzigen Kondensators (18) und der Verbindung zwischen der Spannungsquelle (V₀') und der jeweiligen induktiven Ladungen (10a,10b) angeordnet ist, und die Einrichtungen (34) zum Steuern des zweiten Unterbrechers (30) einen Comparator (54) mit Schwellen umfassen, deren Ansprechempfindlichkeit durch eine Steuereinrichtung (48,50), wie einem Mikroprozessor, in Abhängigkeit von der induktiven Last (10a,10b) ausgewählt wird, deren erster Unterbrecher (14a,14b) sich geöffnet hat.

2. Schaltung nach Anspruch 1,
**dadurch gekennzeichnet,**
daß wenigstens eine der Lasten (10a,10b) aus einer Zündspule (10a) einer Brennkraftmaschine und wenigstens eine andere durch eine Einspritzeinrichtung (10b) einer Brennkraftmaschine ausgebildet ist.

3. Schaltung nach einem der Ansprüche 1 bis 2,
**dadurch gekennzeichnet**,
daß die Induktivität (20) und der Kondensator (18) zueinander in einer Art und Weise proportioniert sind, um ein Aufteilen in eine Frequenz zu verwirklichen, deren Größenordnung über 1 kHz liegt.

## Claims

1. An installation for powering inductive loads (10a, 10b) via first switches (14a, 14b) each in series with a source (Vo') and a respective inductive load (10a, 10b), the installation being provided with means (46 - 48) for periodically closing the first switches (14a, 14b) for successive brief periods, and over-voltage limiting means disposed at the terminals of the first switches (14a, 14b), said over-voltage limiting means comprising a single capacitor (18), a first terminal of which is connected to the junctions between the first switches (14a, 14b) and the respective inductive loads (10a, 10b) through unidirectional conduction components (17), and the second terminal of which is connected to the junction between the first switches (14a, 14b) and the source (Vo'), and a second switch (30) forming part of a series circuit disposed between the first terminal of the single capacitor (18) and the junction between the source and the respective inductive loads (10a, 10b) and controlled in response to the voltage at the terminals of said single capacitor (18), characterised in that the over-voltage limiting means also comprise an inductance (20) disposed in series with the second switch (30) between the first terminal of the single capacitor (18) and the junction between the source (Vo') and the respective inductive loads (10a, 10b), and means for controlling the second switch (30) comprising a threshold comparator (54), the operating thresholds of which are selected by a control means (48, 50) such as a microprocessor in dependence on the inductive load (10a, 10b) whose first switch (14a, 14b) has just opened.

2. An installation according to claim 1, characterised in that at least one of the loads (10a, 10b) is an ignition coil (10a) of an internal combustion engine and at least one other comprises a fuel injector (10b) of the engine.

3. An installation according to claim 1 or 2, characterised in that the inductance (20) and the capacitor (18) are so proportioned relatively to one another as to effect chopping at a frequency above 1 kHz.
